# EUROPÄISCHE PATENTSCHRIFT

(11) **EP 0 375 926 B1**
(45) Veröffentlichungstag und Bekanntmachung des Hinweises auf die Patenterteilung: **21.09.1994**
(21) Anmeldenummer: 89121481.9
(22) Anmeldetag: 21.11.1989
(51) Int. Cl.: F02P 7/02, H04B 15/02

(54) **Entstörumhüllung, insbesondere für eine Zündverteilerkappe**
Noise-suppressing shielding, in particular for an ignition distributor cap
Enveloppe anti-parasite, en particulier pour le capuchon d'un distributeur d'allumage

(30) Priorität: 24.12.1988 DE 3843760
(43) Veröffentlichungstag der Anmeldung: 04.07.1990
(73) Patentinhaber: ROBERT BOSCH GMBH, 70442 Stuttgart (DE)
(72) Erfinder: Schmatz, Jürgen, D-7121 Mundelsheim (DE); Bader, Walter, D-7034 Gärtringen (DE); Lorenz, Richard, D-7142 Rielingshausen (DE); Mödinger, Herrmann, D-7056 Weinstadt 5 (DE)

(56) Entgegenhaltungen:
- DE-A- 3 101 654
- FR-A- 1 029 724
- FR-A- 1 269 219
- FR-A- 1 534 024
- GB-A- 573 660
- US-A- 1 987 755
- US-A- 2 987 587
- US-A- 3 292 605

## Beschreibung

Die Erfindung geht aus von einer Entstörumhüllung gemäß der Gattung des Patentanspruchs 1. Bei einer solchen durch die DE-AS 23 14 460 bekannten Entstörumhüllung sind Ausnehmungen vorgesehen, durch die Federhaken greifen, die zur Auflage an einer Rastmulde einer Zündverteilerkappe kommen und somit die Zündverteilerkappe auf dem Zündverteilergehäuse halten. Diese Ausnehmung dient zugleich als Sicherung der Entstörumhüllung an der Zündverteilerkappe. Dabei ist es jedoch nicht gewährleistet, daß ein sicherer elektrisch leitender Kontakt zwischen Entstörumhüllung und Federhaken hergestellt ist, der selbst metallisch ausgeführt und elektrisch leitend eine Verbindung zur Masse darstellt. Es sind Ausführungen bekannt, bei denen in aufwendiger Weise zwischen der Auflage des Federhakens an der Zündverteilerkappe und dem Federhaken geformte Metallbleche eingelegt werden, die ihrerseits zur Herstellung eines elektrisch leitenden Kontakts zum Federhaken zwischen Zündverteilerkappe und Entstörumhüllung federnd eingespannt sind. Eine solche Kontaktierung der Entstörumhüllung mit einer Masseverbindung ist jedoch sehr aufwendig sowohl in der Herstellung als auch in der Montage. Zudem besteht die Gefahr, daß Gebrauch bei Wartungsarbeiten die Metalleinlegebleche verlorengehen und durch neue ersetzt werden müssen. Es sind auch Entstörumhüllungen bekannt, bei denen für die Masseverbindung das Ende eines Massekabels unlösbar, z. B. durch Löten mit der metallisch ausgeführten Entstörumhüllung verbunden ist. Andererseits ist es jedoch nicht immer notwendig, daß die Endstörumhüllung auch tatsächlich mit Hilfe eines Massebandes geerdet werden muß. Diese Erdung ist insbesondere bei der Nahentstörung der Zündanlage notwendig. In den überwiegenden Fällen von Neufahrzeugen kann deshalb auf ein Masseband verzichtet werden und dementsprechend Kosten eingespart werden.

Mit der erfindungsgemäßen Entstorumhüllung mit den kennzeichnenden Merkmalen des Patentanspruchs 1 erhält man in vorteilhafter Weise die Möglichkeit ein Massekabel je nach Belieben mit der Entstörumhüllung zu verbinden. Insbesondere kann ein solches Massekabel jederzeit nachgerüstet werden. Durch die in den Unteransprüchen aufgeführten Maßnahmen sind vorteilhafte Weiterbildungen der im Anspruch 1 angegebenen Lösung wiedergegeben. In besonders vorteilhafter Weise wird gemäß Anspruch 2 das eine Element der Steckverbindung mit seinem Befestigungsende in die aus Kunststoff bestehende Entstörumhüllung eingebettet. Dies stellt ein vorteilhaftes Herstellungsverfahren dar. Dabei ist es vorteilhaft, sich der im Kfz-Bau üblichen Flachsteckerverbindung zu bedienen gemäß Anspruch 3 und gemäß Anspruch 4 das Element nahe einer Möglichkeit zur Erdung anzubringen, so daß das einzubauende Massekabel sehr kurz gehalten werden kann.

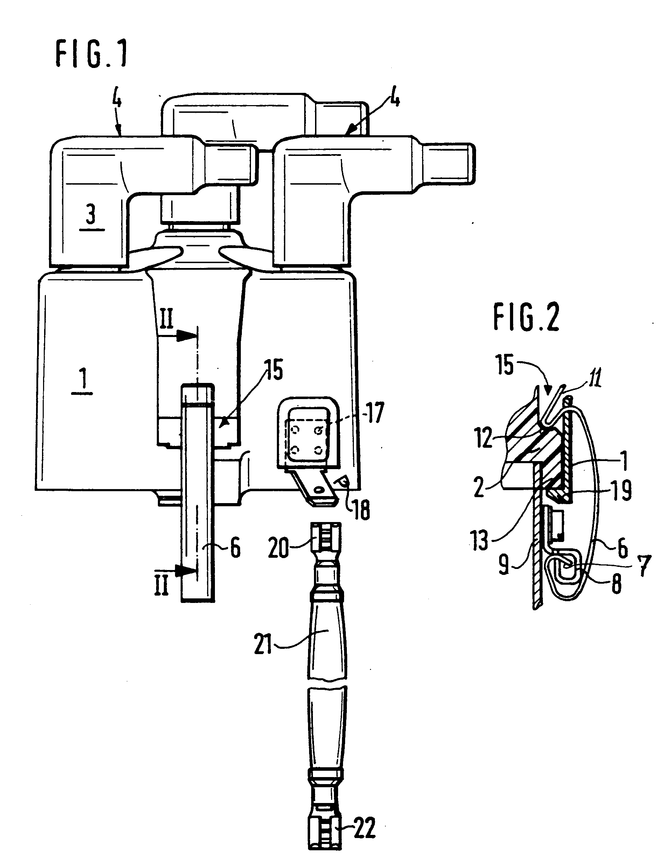

Ein Ausführungsbeispiel ist in der Zeichnung dargestellt und wird in der nachfolgenden Beschreibung näher beschrieben. Es zeigt Figur 1 die Ansicht einer Zündverteilerkappe mit Entstörumhüllung und Figur 2 einen Teilschnitt durch die Zündverteilerkappe gemäß Linie II-II von Figur 1.

In der Figur 1 ist in Seitenansicht eine aus leitfähigem Kunststoff bestehende Entstörumhüllung in Form einer Entstörkappe 1 auf eine darunter verborgene Zündverteilerkappe 2 aufgesetzt. Die Entstörkappe überragenden Anschlußdome 3 der Zündverteilerkappe, auf welche Dome Kabelstecker 4 aufgesetzt sind. Zur Befestigung der Zündverteilerkappe ist ein Federhaken 6 in Figur 1 erkennbar, der in Figur 2 im Schnitt dargestellt ist. Dieser Federhaken ist an seinem einen gekrümmten Ende 7 von einer Halteschelle 8 umschlossen, die mit dem die Zündverteilerkappe tragenden Zündverteilergehäuse 9 verschraubt ist. Dieses Gehäuse ist aus Metall, elektrisch leitend und stellt somit eine Masseverbindung dar. Das andere Ende 11 des Federhakens ist in bekannter Weise S-förmig gebogen und geeignet in eine Rastmulde 12, die am Fuße 13 der Zündverteilerkappe 2 vorgesehen ist, einzuschnappen. Im Bereich dieser Rastmulde weist die aus elektrisch leitfähigem Kunststoff bestehende Entstörkappe eine Ausnehmung 15 auf, so daß der Federhaken ohne die Entstörkappe mechanisch zu belasten zur Rastmulde 12 hindurchgreifen kann. Zur axialen Sicherung der Störkappe an der Zündverteilerkappe kann diese mittels Haken 19, die die Stirnseite der Zündverteilerkappe an ihrem fußseitigen Ende hintergreifen, gesichert werden.

Wie nun Figur 1 entnehmbar, ist in die Wand der Entstörkappe 1 nahe dem ausnehmungsseitigen Rand derselben ein blattförmiges Ende 17 einer Steckfahne 18 eingebettet, d. h. mit leitfähigem Kunststoff umhüllt. Diese Einbettung kann auch durch nachträgliches Einspritzen in eine zuvor vorgesehene Ausnehmung in der Wand der Entstörkappe vorgenommen werden. Die Steckfahne ist Teil einer Steckverbindung, welches ein entsprechend anderes Teil einer Steckverbindung, hier ein im Kraftfahrzeugbau üblicher Flachstecker 20 aufsteckbar ist. Dieser Flachstecker befindet sich am Ende eines Massebandes 21, das in üblicher Weise aus Kupferdrahtgeflecht hergestellt ist und das an seinem anderen Ende einen zweiten Flachstecker 22 aufweist, der auf eine entsprechend mit Masse verbundene Steckfahne, die hier nicht weiter gezeigt ist, aufsteckbar ist.

Die hier am Beispiel einer aus leitendem Kunststoff bestehenden Entstörkappe beschriebenen Ausgestaltung läßt sich auch an metallisch ausgeführten Entstörumhüllungen verwirklichen.

## Patentansprüche

1. Entstörumhüllung (1), aus elektrisch leitfähigem Material bestehend, für ein aus elektrisch isolierendem Material bestehendes, mindestens einen der Zündanlage einer Brennkraftmaschine zugehörigen Hochspannungsanschluß aufweisendes Gehäuseteil (2), insbesondere für eine Zündverteilerkappe, mit wenigstens einer Ausnehmung (15) in der Entstörumhüllung (1) im Bereich von am Gehäuseteil angreifenden Halteelementen (6), durch die das Gehäuseteil (2) mit einem Trägerteil (9), insbesondere lösbar verbindbar ist, dadurch gekennzeichnet, daß mit der Wand der Entstörumhüllung ein Befestigungsende (17) eines Elements (18) einer Steckverbindung unlösbar verbunden ist, mit welchem einem Element ein entsprechendes am Ende eines Erdungsleiters (21) angeordnetes anderes Element (20) der Steckverbindung verbindbar ist.

2. Entstörumhüllung nach Anspruch 1, dadurch gekennzeichnet, daß die Entstörumhüllung aus elektrisch leitfähigem Kunststoff besteht und das Befestigungsende (17) des einen Elements (18) in die Wand der Entstörumhüllung eingebettet ist.

3. Entstörumhüllung nach Anspruch 2, dadurch gekennzeichnet, daß die Entstörumhüllung eine die Zündverteilerkappe umschließende Entstörkappe (1) ist, mit Ausnehmungen (15) für zum Einrasten in Rastmulden (12) an der Zündverteilerkappe vorgesehene Federhaken (6) und daß das eine Element am ausnehmungsseitigen Rand der Entstörkappe (1) eingespritzt ist.

4. Entstörumhüllung nach einem der vorstehenden Ansprüchen, dadurch gekennzeichnet, daß das eine Element eine Steckzunge (18) einer Flachsteckerverbindung ist.

## Claims

1. Suppressor jacket (1), consisting of electrically conductive material, for a housing component (2), in particular for an ignition distributor cap, which consists of electrically insulating material, has at least one high-voltage connection associated with the ignition system of an internal combustion engine and has at least one recess (15) in the suppressor jacket (1) in the region of securing elements (6) which engage on the housing component and by means of which the housing component (2) can be connected, in particular detachably, to a carrier component (9), characterized in that one attachment end (17) of an element (18) of a plug-in connection is non-detachably connected to the wall of the suppressor jacket, to which element another corresponding element (20), which is arranged at the end of an earthing line (21) of the plug-in connection, can be connected.

2. Suppressor jacket according to Claim 1, characterized in that the suppressor jacket consists of an electrically conductive plastic and the attachment end (17) of one (18) of the elements is embedded in the wall of the suppressor jacket.

3. Suppressor jacket according to Claim 2, characterized in that the suppressor jacket is a suppressor cap (1) which encloses the ignition distributor cap and has recesses (15) for spring hooks (6) which are provided to engage in locking recesses (12) on the ignition distributor cap, and in that one of the elements is injection moulded onto the recess-side edge of the suppressor cap (1).

4. Suppressor jacket according to one of the preceding claims, characterized in that one of the elements is a plug-in tongue (18) of a tab connector.

## Revendications

1. Enveloppe antiparasite (1) en une matière conductrice d'électricité, comprenant au moins une partie de boîtier (2) avec un branchement de haute tension de l'installation d'allumage d'un moteur à combustion interne, notamment pour un chapeau de distributeur d'allumage, avec au moins une cavité (15) dans l'enveloppe antiparasite (1), au niveau de l'élément de fixation (6) venant prendre sur la partie de boîtier, et permettant de relier de manière notamment amovible, la partie de boîtier (2) à une partie de support (9), caractérisée en ce qu'une extrémité de fixation (17) d'un élément (18) d'une liaison par enfichage est reliée de manière définitive à la paroi de l'enveloppe antiparasite, élément auguel on peut relier un autre élément (20) d'une liaison de connexion, correspondante, prévue à l'extrémité d'un conducteur de masse (21).

2. Enveloppe antiparasite selon la revendication 1, caractérisée en ce qu'elle est en matière plastique conductrice d'électricité et l'extrémité de fixation (17) d'un élément (18) est enrobée dans la paroi de l'enveloppe antiparasite.

3. Enveloppe antiparasite selon la revendication 2, caractérisée en ce qu'elle est un chapeau antiparasite entourant le chapeau du distributeur d'allumage, comprenant des cavités (15) pour l'accrochage de crochets à ressort (6) prévus dans les goulottes d'accrochage (12) du chapeau de distributeur d'allumage et un élément est injecté dans le bord situé du côté de la cavité du capuchon antiparasite (1).

4. Enveloppe antiparasite selon l'une des revendications précédentes, caractérisée en ce qu'un élément est une languette d'enfichage (18) d'une liaison enfichable à plat.
